(19) Europäisches Patentamt / European Patent Office / Office européen des brevets

(11) **EP 2 870 655 B1**

(12) **FASCICULE DE BREVET EUROPEEN**

(45) Date de publication et mention
de la délivrance du brevet:
**14.09.2016 Bulletin 2016/37**

(21) Numéro de dépôt: **13747702.2**

(22) Date de dépôt: **01.07.2013**

(51) Int Cl.:
*H01M 10/0525* $^{(2010.01)}$    *H01M 10/0585* $^{(2010.01)}$
*H01M 4/66* $^{(2006.01)}$    *H01M 4/74* $^{(2006.01)}$
*H01M 2/26* $^{(2006.01)}$    *H01M 10/04* $^{(2006.01)}$

(86) Numéro de dépôt international:
**PCT/IB2013/055394**

(87) Numéro de publication internationale:
**WO 2014/006557 (09.01.2014 Gazette 2014/02)**

(54) **COLLECTEUR DE COURANT AVEC MOYENS D'ÉTANCHÉITÉ INTÉGRÉS, BATTERIE BIPOLAIRE COMPRENANT UN TEL COLLECTEUR**

STROMABNEHMER MIT INTEGRIERTER DICHTUNGSVORRICHTUNG, BIPOLARE BATTERIE MIT SOLCH EINEM STROMABNEHMER

CURRENT COLLECTOR WITH INTEGRATED LEAK-PROOFING MEANS, BIPOLAR BATTERY COMPRISING SUCH A COLLECTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.07.2012 FR 1256373**

(43) Date de publication de la demande:
**13.05.2015 Bulletin 2015/20**

(73) Titulaire: **Commissariat à l'Énergie Atomique
et aux Énergies Alternatives
75015 Paris (FR)**

(72) Inventeurs:
• **DAMLENCOURT, Jean-François
F-38190 Laval (FR)**
• **CHAMI, Marianne
F-38600 Fontaine (FR)**

(74) Mandataire: **Nony
11 rue Saint-Georges
75009 Paris (FR)**

(56) Documents cités:
EP-A1- 1 596 459    WO-A2-2012/170789
FR-A1- 2 961 637    US-A- 5 750 289

EP 2 870 655 B1

**Description**

Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium comportant au moins un collecteur de courant à fonction bipolaire, aussi appelé batterie bipolaire. Dans une telle batterie bipolaire, le collecteur bipolaire supporte sur chacune de ses faces opposées un des deux matériaux d'électrode à signe opposé, c'est-à-dire avec une cathode (électrode positive) supportée par l'une des faces et une anode (électrode négative) supportée par l'autre des faces opposées.

L'invention vise à améliorer l'étanchéité des générateurs électrochimiques vis-à-vis de l'électrolyte, et en particulier à améliorer l'étanchéité d'une batterie bipolaire vis-à-vis de l'électrolyte sous forme liquide.

Etat de la technique

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :

- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui-même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

Afin d'augmenter le potentiel moyen d'un accumulateur Li-ion monopolaire tout en conservant une densité d'énergie comparable, il est connu de réaliser une batterie avec une pluralité de cellules électrochimiques en série. L'architecture de la batterie est ainsi qualifiée de bipolaire car elle comprend une cathode d'une cellule et une anode d'une cellule adjacente qui sont supportées sur un même collecteur de courant sous forme d'une plaque, qualifié lui-même d'électrode bipolaire. L'architecture d'une batterie bipolaire correspond ainsi à la mise en série de plusieurs accumulateurs monopolaires par l'intermédiaire des électrodes ou collecteurs de courant bipolaires, avec toutefois l'avantage d'avoir une résistance électrique réduite par rapport à des accumulateurs monopolaires reliés en série par des connecteurs extérieurs. On peut citer ici de nombreux demandes de brevets ou brevets concernant de telles batteries bipolaires, tels que US 7279248, US 7220516, US 7320846, US 7163765, WO 03/047021, WO 2006/061696, US 7097937.

Les avantages subséquents d'une batterie bipolaire sont d'avoir une masse réduite et de ne pas comporter de volumes inutiles.

La principale difficulté de conception d'une batterie bipolaire est la réalisation de compartiments parfaitement étanches à l'électrolyte, en général sous forme liquide, les uns vis-à-vis des autres. En effet, une mauvaise étanchéité entraine un dysfonctionnement de la batterie bipolaire par court-circuits ioniques.

Cela est d'ailleurs corroboré par le fait que la majorité de la littérature brevets portant sur le domaine des batteries Li-ion bipolaires concerne des solutions d'étanchéité, aussi appelée scellement, pour éviter les fuites d'électrolyte d'un compartiment à l'autre (courts circuits ioniques). Quelle que soit la soit le système d'étanchéité retenu, il doit :

- être résistant chimiquement à l'électrolyte liquide, par exemple constitué d'une solution de sel de Lithium LiPF6 dans un mélange de solvant carboné d'éthylène (EC), diméthyle carbonate (DMC) ;
- être facile à mettre en oeuvre : en effet, lors des opérations d'empilement des différents éléments constituants une batterie bipolaire, la mise en oeuvre de l'étanchéité doit pouvoir être compatible avec une ligne de fabrication industrielle et être réalisée à des relativement basses températures ne générant pas ou prou de dégradation des électrodes, du séparateur ou encore de l'électrolyte ;
- assurer une étanchéité totale à long terme.

Parmi les demandes de brevet ou brevets déjà cités ci-dessus, on peut citer le brevet US 7220516 qui décrit une solution avec un film adhésif flexible 5, 6, collé sur la périphérie du collecteur bipolaire.

On peut également citer le brevet US 7320846 qui décrit une solution d'enrobage des collecteurs 4 et électrolytes 6 dans une résine 10.

On peut également citer le brevet US 7163765 qui décrit une solution d'étanchéité avec des entretoises 9 mixtes en polyamide/PP agencées entre collecteurs bipolaires le polyamide étant soudé directement à la périphérie des collecteurs à distance des cellules).

Le brevet US 7097937 propose quant à lui une solution d'étanchéité double puisqu'une barrière intérieure 14,22 en fluoropolymère est agencée sur la périphérie du collecteur bipolaire 11 et un cadre extérieur 18, 23 en élastomère est agencé à l'extérieur de la barrière 14, 22 sur et autour du collecteur bipolaire avec éventuellement l'agencement d'une bague supplémentaire 15 en élastomère sur le collecteur 11.

On peut citer encore la demande de brevet EP 2073300 au nom de la demanderesse qui propose une solution selon laquelle les dimensions des plaques sont augmentées l'une par rapport à l'autre adjacente et les joints d'étanchéité interposés entre les plaques interconnectrices sont décalés transversalement afin que deux joints ne se trouvent pas au droit l'un de l'autre selon l'axe d'empilement des cellules.

On peut citer également la demande de brevet JP 2010153224 qui décrit la réalisation d'une batterie bipolaire avec chaque collecteur de courant bipolaire 1 constitué par un polymère chargé de particules en matériau conducteur, l'étanchéité étant réalisée par un cordon en résine 31 à la périphérie de et sur chaque face de collecteur bipolaire 1. Une batterie bipolaire selon l'enseignement de cette demande ne peut être réellement envisagée pour une application où l'on cherche une forte puissance à délivrer par la batterie. En particulier, le collecteur de courant bipolaire 1 envisagé présente une faible conductivité électronique et une résistance électrique élevée.

On peut citer enfin la demande WO 2011/157751 qui décrit une solution d'intégration des moyens d'étanchéité à base de polymère à une grille ou feuille métallique à fonction de collecteur de courant. L'enseignement de cette demande correspond au préambule de la revendication 1 du présent document.

Ainsi, on peut résumer de la manière suivante les solutions déjà envisagées pour améliorer l'étanchéité des compartiments entre eux vis-à-vis de l'électrolyte dans une batterie bipolaire Li-ion :

- réalisation systématique du collecteur de courant bipolaire aussi appelé électrode bipolaire sous la forme d'une plaque ou en un polymère chargé en particules en matériau conducteur,
- utilisation de colles ou résines diverses à la périphérie de la plaque ou du polymère chargé en particules en matériau conducteur,
- augmentation du format de plaque de collecteur de courant bipolaire pour créer une barrière supplémentaire à l'électrolyte ;
- intégration des moyens d'étanchéité à base de polymère à une grille ou feuille métallique à fonction de collecteur de courant.

Toutes ces solutions d'étanchéité déjà envisagées ne sont pas pleinement satisfaisantes. En particulier, si la solution selon la demande WO 2011/157751 est parfaitement satisfaisante pour l'étanchéité à proprement parler ainsi que pour le gain de poids qu'elle apporte au final à la batterie bipolaire, elle peut encore être améliorée, notamment afin d'augmenter la conductivité électronique entre les deux matériaux d'électrode de part et d'autre d'un collecteur de courant bipolaire et de diminuer les résistances électriques internes à ce dernier.

La demande de brevet EP 1 596 459 divulgue une batterie Li-ion, comprenant une pluralité de cellules électrochimiques en parallèle électrique dans laquelle chaque collecteur de courant est une électrode biface de même polarité constituée d'une bande en polymère supportant sur ses deux faces principales une couche métallique elle-même revêtue d'une couche d'anode ou de cathode. Les deux faces principales de la zone périphérique de chaque collecteur de courant à l'opposé de celle assurant l'isolation électrique sont impérativement recouvertes de la couche métallique afin d'assurer la connexion électrique avec un film conducteur servant de collecteur terminal, disposé sur les bords latéraux des cellules. On ne peut en aucun cas appliquer cette architecture à une batterie bipolaire car, dans cette dernière les bords latéraux sont ceux prévus pour la réalisation des parois étanches aux électrolytes et non conducteurs électriques.

Le but général de l'invention est de proposer une autre solution que celles déjà envisagées pour améliorer l'étanchéité des compartiments entre eux vis-à-vis de l'électrolyte, en particulier de l'électrolyte liquide, dans une batterie bipolaire Li-ion, plus généralement dans un générateur électrochimique au lithium.

Un but particulier est de proposer une solution d'étanchéité d'une batterie bipolaire, plus généralement d'un générateur électrochimique au lithium, vis-à-vis de l'électrolyte, plus particulièrement d'un électrolyte liquide, qui augmente la conductivité électronique des collecteurs bipolaires qui la constituent et qui diminue leurs résistances électriques internes.

Exposé de l'invention

Pour ce faire, l'invention a pour objet un dispositif pour générateur électrochimique au lithium, dans lequel un électrolyte est présent sous forme liquide ou de gel, comportant une bande en matériau isolant électrique comportant au moins un polymère et, au moins une couche métallique formant collecteur de courant, déposée sur au moins une des deux faces principales dans la partie centrale de la bande, la partie centrale de la bande comportant une pluralité de trous débouchant sur ses deux faces principales opposées, les trous étant remplis au moins partiellement d'un métal continu avec chaque couche métallique déposée, toute la périphérie des faces principales de la bande étant dépourvue de couche métallique et étant configurée pour servir de partie de paroi étanche à l'électrolyte dans le générateur, et au moins une couche métallique étant recouverte d'une électrode en matériau d'insertion au lithium.

Par « périphérie de bande dépourvue de couche métallique », on entend que toute la périphérie des faces principales est exempte de matière métallique et qu'elle sert de partie de paroi étanche aux électrolytes dans le générateur électrochimique.

Un dispositif selon l'invention peut constituer aussi bien un collecteur bipolaire qu'un collecteur terminal. Dans le dernier cas, la connexion sur les électrodes terminales peut se faire au moyen d'une pâte de métal, typiquement en aluminium, et d'un collecteur métallique quelconque en aluminium ou en cuivre.

Lorsqu'on effectue un dépôt de pâte métallique sur chaque face, les trous se remplissent de pâte et le contact électrique s'effectue par adhésion des pâtes de chaque face assurant ainsi une conduction électrique.

Ainsi, selon l'invention, tout comme pour selon la demande WO 2011/157751, on intègre en quelque sorte les moyens d'étanchéité à une pièce dont la fonction est d'être un collecteur de courant.

Autrement dit, on définit en quelque sorte un nouveau semi-produit d'une batterie intégrant à la fois :

- le collecteur de courant qui lorsqu'il est bipolaire assure la conduction électrique entre la cathode d'une cellule et l'anode d'une cellule électrochimique adjacente, i-e empilée immédiatement au-dessous ou au-dessus,
- une zone périphérique exclusivement en matériau isolant électrique qui participe une fois assemblée à la réalisation de l'étanchéité aux électrolytes de la batterie. Il va de soi que dans le cadre de l'invention, l'homme de l'art veille à définir un ou des matériaux isolants (polymère(s)) qui ne fluent pas dans les gammes de température de fonctionnement d'une batterie bipolaire.

Selon l'invention, comparativement à un dispositif selon la demande WO2011/157751 ou JP 2010153224, du fait de la présence de trous remplis de métal conducteur, le dispositif selon l'invention présente une conductivité électronique augmentée et une résistance électrique interne réduite.

Un dispositif selon l'invention peut avoir une épaisseur comprise entre 10 et 100 $\mu$m, de préférence entre 25 et 50 $\mu$m.

Typiquement, le métal continu est de l'aluminium ou un alliage à base d'aluminium.

Par métal continu, on entend que le métal obstrue le trou, de façon à garantir une étanchéité. Néanmoins, le trou peut ne pas être rempli dans sa totalité.

Un dispositif selon l'invention peut avoir toute forme géométrie, telle qu'une section de forme polygonale, par exemple un rectangle ou un carré, avec une zone dépourvue de couches métalliques définie ci-dessus agencée à la périphérie.

On peut envisager des dimensions planaires de longueur comprise entre 40 et 70 cm, typiquement de l'ordre de 50 cm, et de largeur comprise entre 10 et 25 cm, typiquement de l'ordre de 15 cm. La zone périphérique dépourvue de couche métallique selon l'invention peut former avantageusement un cadre de largeur comprise entre 1 mm et 10 cm, plus particulièrement entre 3 mm et 12 mm, typiquement de l'ordre de 5 mm. Ainsi, la zone périphérique dépourvue de couche métallique selon l'invention peut représenter une superficie inférieure à 25 % de la superficie totale du dispositif, de préférence inférieure à 20 %, de préférence encore inférieure à 15 %.

Le dispositif selon l'invention permet donc de simplifier l'étanchéification proprement dite et d'apporter un fort gain en masse (du fait de la suppression de plaque en tant que collecteur) et, par là en performance. En effet, à masse égale, la densité d'énergie d'une batterie selon l'invention est augmentée et donc on obtient de meilleures performances pour ladite batterie. En outre, l'étanchéité de la batterie étant améliorée, la batterie est plus performante. Enfin, la conductivité électrique étant augmentée et la résistance interne du dispositif selon l'invention étant diminuée, on peut envisager une utilisation à forte puissance pour les batteries bipolaires intégrant des dispositifs selon l'invention.

Selon une variante, le polymère majoritaire constituant la bande est une polyoléfine. Le polymère majoritaire peut être ainsi choisi parmi le polyéthylène (PE) ou le polypropylène (PP). On peut ainsi choisir des polymères qui ont déjà fait leur preuve en tant que constituant d'emballage souple de batterie Li-ion, tel que l'emballage commercialisé par la société Showa Denko sous les références commerciales N° ADR-ON25/AL40/CPP40 ou N° ADR-ON25/AL40/CPP80.

La bande peut comprendre au moins un autre polymère, ledit autre polymère étant interposé entre la polyoléfine et le collecteur de courant pour améliorer l'accroche entre eux. L'autre polymère peut être choisi parmi un polyester ou un polyuréthane. La bande peut comprendre également au moins un autre polymère pour améliorer les caractéristiques telles que la souplesse, la légèreté, de la zone périphérique à fonction d'étanchéité.

Selon une variante alternative, le polymère majoritaire constituant la bande peut être une résine bi-composante, de préférence une résine acrylique. La résine acrylique présente en effet une excellente tenue mécanique au contact des électrolytes carbonatés.

Les trous conformes à l'invention peuvent être de section cylindrique ou de section tronconique.

Avantageusement, le diamètre des trous est compris entre 50 et 500 $\mu$m, de préférence entre 50 et 200 $\mu$m.

La densité des trous étant égal à un nombre compris entre 0,1 et 1 /cm$^2$ de bande, de préférence entre 0,1 et 0,3 /cm$^2$ de bande.

Le nombre et les dimensions de trous par bande en polymère est déterminé en fonction des dimensions de cette dernière et des caractéristiques électriques possibles. En effet, la résistance électrique interne et l'échauffement électrique (dissipation par effet joule) d'un dispositif selon l'invention dépend du nombre et des dimensions des trous.

En ce qui concerne la réalisation des trous dans une bande en polymère, on peut envisager d'utiliser tous les moyens susceptibles de faire des matrices de trous de faibles dimensions dans un film en polymère. On peut par exemple utiliser un outil à pointes chauffantes qui, par déplacement de l'outil transversalement au plan du film, viennent réaliser chacune une fusion locale du polymère en définissant ainsi un trou calibré. On peut également envisager l'utilisation d'un laser qui va réaliser une fusion localisée du polymère. Un tel laser peut ainsi être monté sur un support approprié et programmé pour réaliser des matrices de trous. Le support peut être une tête actionnée par piézoélectrique de manière à permettre un déplacement précis du laser selon les directions transversales de la bande. Un avantage à utiliser un laser plutôt qu'un outil à pointes chauffantes est que les dimensions des trous peuvent être modifiées aisément.

En fonction du type de matériaux d'électrode d'insertion au lithium choisi, le collecteur de courant formé par une couche métallique peut être en aluminium ou métallisée en surface d'un autre métal, par exemple en aluminium superposé à du cuivre.

Lorsque le collecteur du courant du dispositif est destiné à être bipolaire, les deux couches métalliques de part et d'autre de la bande sont recouvertes chacune d'une électrode en matériau d'insertion au Lithium.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule $LiM_y(XO_z)_n$ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi: oxyde de titane lithié ou non, par exemple $Li_4Ti_5O_{12}$ ou $TiO_2$. Plus particulièrement, le matériau d'électrode négative peut être choisi parmi les matériaux carbonés, les oxydes de titane non lithiès et leurs dérivés et les oxydes de titane lithiés tels que $Li_4Ti_5O_{12}$ et leurs dérivés et un mélange de ceux-ci.

Par « dérivé lithié », on entend ici et dans le cadre de l'invention, des composés de formule $Li_{(4-x1)}M_{x1}Ti_5O_{12}$ et $Li_4Ti_{(5-y1)}N_{y1}O_{12}$, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, $Ti_{(5-y1)}N_{y1}O_{12}$, avec y1 compris entre 0 et 0,2 et N est un élément chimique choisi parmi Na, K, Mg, Nb, Al, Ni, Co, Zr, Cr, Mn, Fe, Cu, Zn, Si et Mo.

Lorsque le collecteur du courant du dispositif est destiné à être monopolaire, une seule couche métallique est recouverte d'une électrode en matériau d'insertion au Lithium.

L'invention concerne également une batterie bipolaire comprenant au moins deux cellules électrochimiques empilées l'une sur l'autre et au moins un dispositif décrit ci-dessus avec les deux couches formant un collecteur de courant, recouvertes chacune d'une électrode, dans lequel l'une des couches du collecteur de courant est recouverte de l'anode en matériau d'insertion au lithium de l'une des deux cellules et l'autre des deux couches du collecteur de courant est recouverte de la cathode en matériau d'insertion au lithium de l'autre des deux cellules, la périphérie de la bande en au moins un polymère constituant une zone périphérique d'une paroi étanche aux électrolytes des deux cellules qui entoure celles-ci.

Une telle batterie comprend en outre avantageusement au moins un dispositif décrit ci-dessus avec une seule couche recouverte d'une électrode, l'autre face non recouverte par une électrode étant en contact par les trous remplis de métal avec un collecteur de courant terminal.

De préférence, les anodes sont en $Li_4Ti_5O_{12}$ et les cathodes en $LiFePO_4$.

L'invention concerne enfin un procédé de réalisation d'une batterie bipolaire comprenant au moins deux cellules électrochimiques empilées l'une sur l'autre comprenant les étapes suivantes :

a/ réalisation d'un dispositif décrit précédemment avec les deux faces recouvertes chacune d'une couche métallique chacune recouverte d'une électrode en matériau d'insertion au lithium et deux dispositifs dont une seule face recouverte d'une couche métallique elle-même recouverte d'une électrode en matériau d'insertion au lithium, de sorte que :

- la seule face d'un des deux dispositifs, sur laquelle est déposée la couche formant collecteur de courant, est recouverte d'une anode en matériau d'insertion au lithium,
- la seule face de l'autre des deux dispositifs, sur laquelle est déposée la couche formant collecteur de courant, est recouverte d'une cathode en matériau d'insertion au lithium et,
- l'une des deux faces du dispositif, sur laquelle est déposée une couche formant collecteur de courant, est recouverte d'une cathode en matériau d'insertion au lithium tandis que l'autre des deux faces du dispositif, sur laquelle est déposée une couche formant collecteur de courant, est recouverte d'une anode en matériau d'insertion au lithium,

b/ empilement des trois dispositifs avec intercalage d'un séparateur entre deux adjacents, l'empilement avec intercalage étant réalisé de sorte que :

- l'anode de l'un des deux dispositifs décrits ci-dessus est en regard de la cathode du dispositif décrit ci-dessus en étant séparés d'un premier séparateur,
- la cathode de l'autre des deux dispositifs décrits ci-dessus est en regard de l'anode du dispositif décrit ci-dessus en étant séparés d'un deuxième séparateur,

c/ mise en pression des périphéries des trois bandes des dispositifs les unes contre les autres, les séparateurs étant imprégnés chacun d'un électrolyte,

d/ maintien des trois bandes pressées les unes contre les autres afin de constituer une paroi étanche aux électrolytes des deux cellules qui entoure celles-ci.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi $LiPF_6$, $LiClO_4$, $LiBF_4$ et $LiAsF_6$.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate ($CF_3SO_3$), bis (trifluorométhanesulfonate imide $[(CF_3SO_2)_2N]$ et tris(trifluorométhanesulfonate) méthide $[(CF_3SO_2)_3C]$.

En ce qui concerne, l'étape d'imprégnation du séparateur par l'électrolyte, on peut envisager soit de le faire avant l'empilement, c'est-à-dire d'avoir imprégné le séparateur par l'électrolyte lors de sa mise en place (intercalage), soit une fois l'empilement selon l'étape b/ achevé.

Selon un mode de réalisation de l'invention, plusieurs dispositifs comportant une électrode sur chaque face peuvent être utilisés de façon à créer n cellules électrochimiques dans une batterie bipolaire selon l'invention, n étant un entier positif. Le nombre entier n peut par exemple être égal à 13, ce qui implique alors la réalisation d'un nombre égal 12 dispositifs selon l'invention, chacun une électrode sur chaque face. Autrement dit, on peut réaliser une batterie bipolaire comprenant n cellules électrochimique empilées individuellement les unes sur les autres, en réalisant les étapes a/ à d/ susmentionnées avec (n-1) dispositifs chacun avec une électrode sur chaque face et deux dispositifs, aux extrémités de l'empilement, chacun avec une seule électrode sur une face.

On peut réaliser avantageusement et de manière simple les étapes c/ et d/ selon deux alternatives :

- soit par la mise en place de l'emballage rigide de la batterie bipolaire,
- soit par thermoscellage à l'aide d'un mors en forme de U autour des parties périphériques des bandes en matériau isolant électrique.

Le dépôt d'au moins une électrode sur une couche métallique formant un collecteur de courant d'au moins un des dispositifs peut être réalisé par une technique d'impression usuelle telle que sérigraphie, héliographie, flexographie, spray,....

Le dépôt de chaque couche métallique sur une face est avantageusement réalisé par sérigraphie d'une pâte métallique de sorte à remplir au moins partiellement chaque trou. La pâte est avantageusement en aluminium. Bien entendu, on peut envisager plusieurs pâtes de matériaux différents, par exemple une pâte en aluminium et une pâte en cuivre, lorsqu'on souhaite constituer un collecteur de courant à plusieurs matériaux.

Description détaillée

D'autres avantages et caractéristiques ressortiront mieux à la lecture de la description détaillée, faite à titre illustratif en référence aux figures suivantes parmi lesquelles :

- la figure 1 est une vue schématique en coupe longitudinale d'une batterie bipolaire au lithium selon l'état de l'art,
- les figures 2A et 2B sont respectivement des vues de face et en coupe d'un collecteur de courant bipolaire utilisé dans une batterie bipolaire au lithium selon l'état de l'art,
- les figures 3A et 3B sont respectivement des vues de face et en coupe d'un autre collecteur de courant bipolaire utilisé dans une batterie bipolaire au lithium selon l'état de l'art,
- la figure 4 est une vue schématique en coupe d'un trou d'un bande en polymère rempli partiellement d'un métal conformément à l'invention,
- les figures 5A à 5C sont des vues schématiques illustrant chacune une étape d'un procédé de réalisation de trous dans une bande en polymère selon l'invention,
- la figure 6 est une vue schématique de face d'une bande en polymère obtenu selon le procédé des figures 5A à 5C,
- la figure 7 est une vue en coupe d'un dispositif selon l'invention dépourvu d'électrode,
- les figures 8A à 8D' sont des vues schématiques illustrant chacune une étape d'un procédé de réalisation d'une batterie polaire à partir de trois dispositifs selon l'invention, l'étape 8D' étant une étape alternative à l'étape 8D.

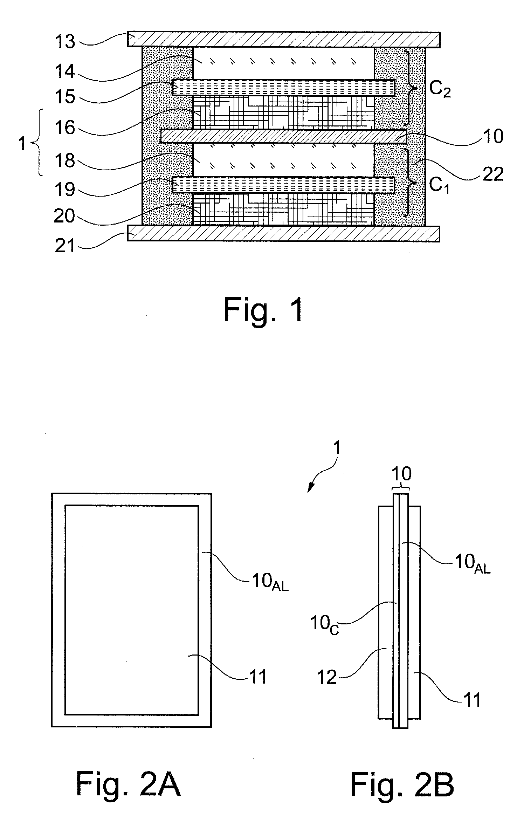

Par souci de clarté, les mêmes références désignant les mêmes éléments de batterie bipolaire selon l'état de l'art et selon l'invention sont utilisées pour toutes les figures 1 à 6B.

On précise que différents éléments en particulier les couches de matériau et trous selon l'invention sont représentés uniquement par souci de clarté et qu'ils ne sont pas à l'échelle.

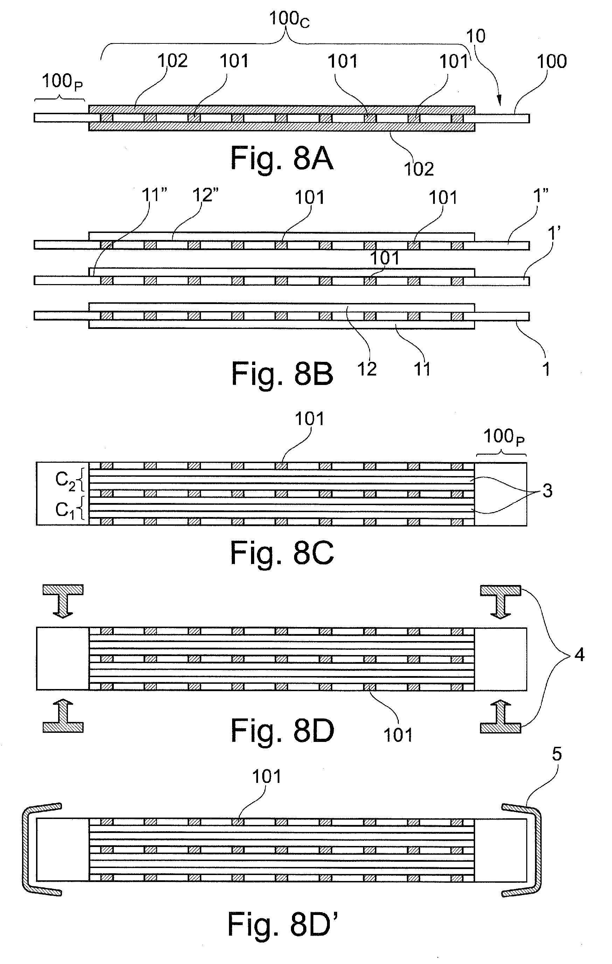

On précise également que les couches métalliques 102 formant collecteur de courant ne sont pas représentées aux figures 8B à 8D' à des fins de clarté.

On a représenté une batterie bipolaire Li-ion selon l'état de l'art en figure 1, telle qu'elle est illustrée dans la demande de brevet WO 03/047021. Cette batterie comporte en partie supérieure un substrat conducteur en aluminium 13 (collecteur de courant terminal positif) et une couche active 14 à base de matériau d'insertion au lithium positif, tel que du $Li_1.O_4Mn_{1.96}O_4$ et en partie inférieure un substrat conducteur en aluminium 21 (collecteur de courant terminal négatif) et une couche active 20 à base de matériau d'insertion au lithium positif, tel que du $Li_4Ti_5O_{12}$.

Au sein de cette batterie, une électrode bipolaire 1, aussi appelé collecteur de courant bipolaire, comprend une couche d'anode 16 et une couche de cathode 18 de part et d'autre d'un substrat conducteur en aluminium 10 sous la forme d'une plaque. Les électrodes inférieures 20 et supérieure14 sont séparées de l'électrode bipolaire 1 par deux séparateurs 15, 19 dans_lequel un électrolyte est présent sous forme liquide ou de gel. L'étanchéité aux électrolytes de la batterie entre les deux cellules électrochimiques adjacentes constituées 14, 15, 16 et 18, 19, 20 est assurée par un joint 22 qui est réalisé par un dépôt de résine ou de colle sur la périphérie de toutes les électrodes et la plaque 10.

Un collecteur de courant bipolaire 10 selon l'état de l'art est, en fonction des matériaux d'insertion aux ions lithium employés pour la réalisation des électrodes :

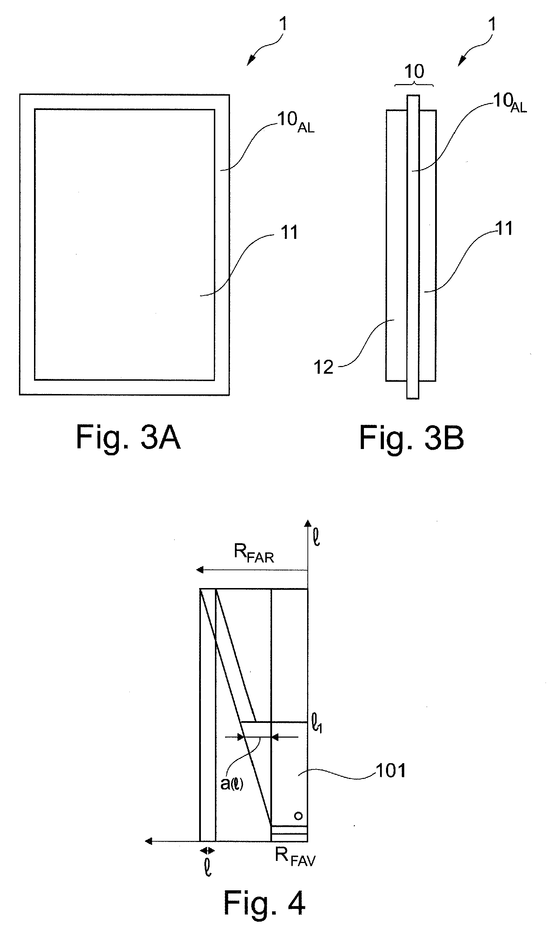

- soit constitué de deux plaques superposées, dont l'une typiquement en aluminium 10A1 est recouverte par une cathode 11 et l'autre typiquement en cuivre 10C est recouverte par une anode 12 (figures 2A et 2B),
- soit constitué d'une seule plaque typiquement en aluminium 10A1 recouverte sur une des faces par une cathode 11 et sur l'autre de ses faces par une anode 12 (figures 3A et 3B). La difficulté principale rencontrée dans la conception d'une batterie bipolaire selon l'état de l'art est la réalisation de compartiments parfaitement étanches à l'électrolyte, en général sous forme liquide, les uns vis-à-vis des autres, tel qu'entre les deux cellules C1 et C2, c'est-à-dire entre compartiments référencés 14, 15, 16 et 18, 19, 20 sur la figure 1.

La réalisation des joints 22 ou l'augmentation des plaques 10 de l'électrode bipolaire selon l'état de l'art pour y parvenir ne sont pas pleinement satisfaisants.

Aussi, les inventeurs proposent une solution de conception d'un collecteur de courant complètement différente, qui permet d'avoir une conductivité électrique augmentée et une résistance interne diminuée par rapport à un collecteur de courant selon la demande de brevet JP 2010153224 ou selon la demande WO2011/157751.

Les inventeurs proposent ainsi en substance de réaliser des trous débouchant sur chacune des faces principales opposées d'une bande en polymère, puis de déposer sur au moins une des faces une couche métallique qui va remplir les trous. Le métal remplissant les trous est ainsi continu avec le ou les couches formant le collecteur de courant pour électrodes déposées par la suite, ce qui permet d'avoir une conductivité électrique dudit collecteur élevée tout en ayant une résistance électrique interne faible.

On a déterminé par calcul la résistance électrique d'un trou 101 de section tronconique rempli d'un métal de conductivité électrique donnée ρ, comme schématisé en figure 4.

On précise que le trou 101 doit être bouché mais pas nécessairement rempli dans sa totalité.

L'équation s'écrit de la manière suivante :

$$R_{via} = \rho \int_0^l \frac{1}{S(x)} \partial x = \rho \left\{ \int_0^{l_1} \frac{1}{S_1(x)} \partial x + \int_{l_1}^l \frac{1}{S_2(x)} \right\}$$

dans laquelle R via désigne la résistance du trou, p désigne la résistivité du métal remplissant le trou, 1 désigne la hauteur du trou, 11 désigne la hauteur de métal remplissant le trou.

Le calcul du premier terme de l'équation se fait comme suit :

$$\int_0^{l_1} \frac{1}{S_1(x)} \partial x = \frac{1}{\pi} \int_0^{l_1} \frac{1}{r(x)^2} \partial x = \frac{1}{\pi} \int_0^l \frac{1}{\left( \frac{(r_{FAR} - r_{FAV})}{l} x + r_{FAV} \right)^2} \partial x$$

En posant :

$$\Delta r = r_{FAR} - r_{FAV}, \frac{\Delta r}{l} = a \text{ et } r_{FAV} = b$$

$$\int_0^{l_1} \frac{1}{S_1(x)} \partial x = \frac{1}{\pi} \int_0^{l_1} \frac{1}{(ax+b)^2} \partial x = \frac{1}{\pi} \left[ -\frac{1}{a \cdot (ax+b)} \right]_{x=0}^{x=l_1}$$

$$\int_0^{l_1} \frac{1}{S_1(x)} \partial x = \frac{1}{\pi} \left[ \left( -\frac{1}{a \cdot (al_1+b)} \right) + \left( \frac{1}{ab} \right) \right]$$

$$\int_0^{l_1} \frac{1}{S_1(x)} \partial x = \frac{1}{\pi} \left[ \frac{-b + al_1 + b}{ab(al_1+b)} \right] = \frac{1}{\pi} \left[ \frac{l_1}{b(al_1+b)} \right]$$

Le calcul du deuxième terme de l'équation se fait comme suit :

$$\int_{l_1}^l \frac{1}{S_2(x)} \partial x = \frac{1}{\pi} \int_{l_1}^l \frac{1}{r(x)^2 - r_1^2(x)} \partial x = \frac{1}{\pi} \int_{l_1}^l \frac{1}{r^2(x) - (r(x) - e)^2} \partial x = \frac{1}{\pi} \int_{l_1}^l \frac{1}{r^2(x) - r^2(x) + 2r(x)Xe - e^2} \partial x$$

$$\int_{l_1}^l \frac{1}{S_2(x)} \partial x = \frac{1}{\pi} \int_{l_1}^l \frac{1}{2a(ax+b) - e^2} = \frac{1}{\pi} \int_{l_1}^l \frac{1}{2eax + 2eb - e^2} = \frac{1}{\pi} \int_{l_1}^l \frac{1}{Ax+B}$$

Avec : A = 2ea et B = 2eb-e$^2$

$$\int_{l_1}^{l} \frac{1}{S_2(x)} \partial x = -\frac{1}{\pi}\left[Ln(Ax+B)\right]_{l_1}^{l}$$

$$\int_{l_1}^{l} \frac{1}{S_2(x)} \partial x = \frac{1}{\pi} Ln \frac{Al+B}{Al_1+B}$$

D'où, au final, l'équation s'écrit de la manière suivante :

$$R_{via} = \rho \left\{ \int_0^{l_1} \frac{1}{S_1(x)} \partial x + \int_{l_1}^{l} \frac{1}{S_2(x)} \partial x \right\} = \frac{\rho}{\pi} \left\{ \left[ \frac{l_1}{b(al_1+b)} \right] + \frac{1}{A} Ln \frac{Al+B}{Al_1+B} \right\}$$

Ainsi, on peut aisément déterminer par calcul les meilleures dimensions possibles d'un trou afin de minimiser la résistance interne induite par le métal qui le remplit.

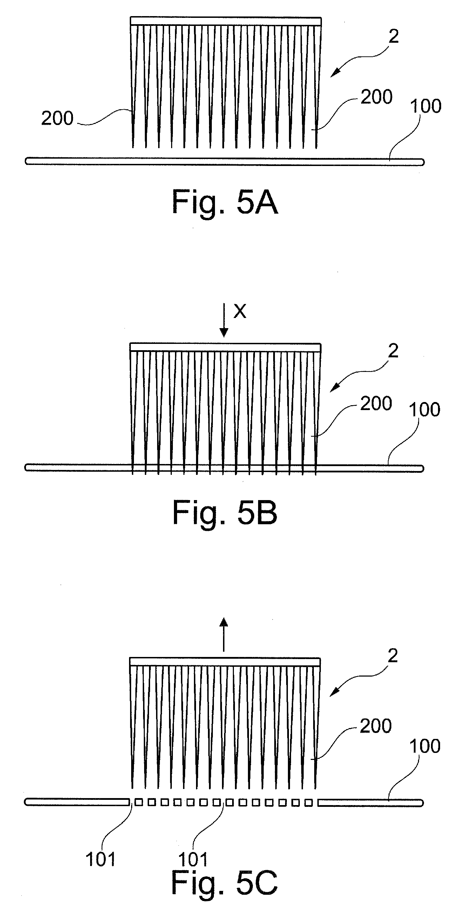

Aux figures 5A à 5C, on a illustré un procédé de réalisation d'une partie 10 d'un dispositif selon l'invention.

On réalise tout d'abord une bande 100 en polymère.

On approche alors un outil 2 à pointes chauffantes de préférence sous la forme d'une matrice dont le nombre de pointes correspond au nombre de trous traversant que l'on souhaite réaliser. Le déplacement de l'outil 2 et fait selon une direction X orthogonale au plan de la bande en polymère (figure 5A).

Les pointes sont chauffées ici à une température supérieure à la température de fusion du polymère majoritaire constituant la bande 100. Ainsi, une bande en PE, dont la température de fusion est comprise entre 85 et 140°C doit être percée par des pointes chauffées à une température supérieure.

Le déplacement a lieu selon une course donnée afin d'obtenir des trous 101 de dimensions calibrées (figure 5B). Dans l'exemple illustré, les pointes 200 sont toutes identiques et de forme conique et permettent donc d'obtenir des trous 101 identiques de forme tronconique.

Une fois, le déplacement selon la course donnée réalisé, et donc les trous 101 de dimensions calibrées obtenus, on procède au retrait de l'outil 2, c'est-à-dire un déplacement selon la même direction X mais avec éloignement de l'outil (figure 5C).

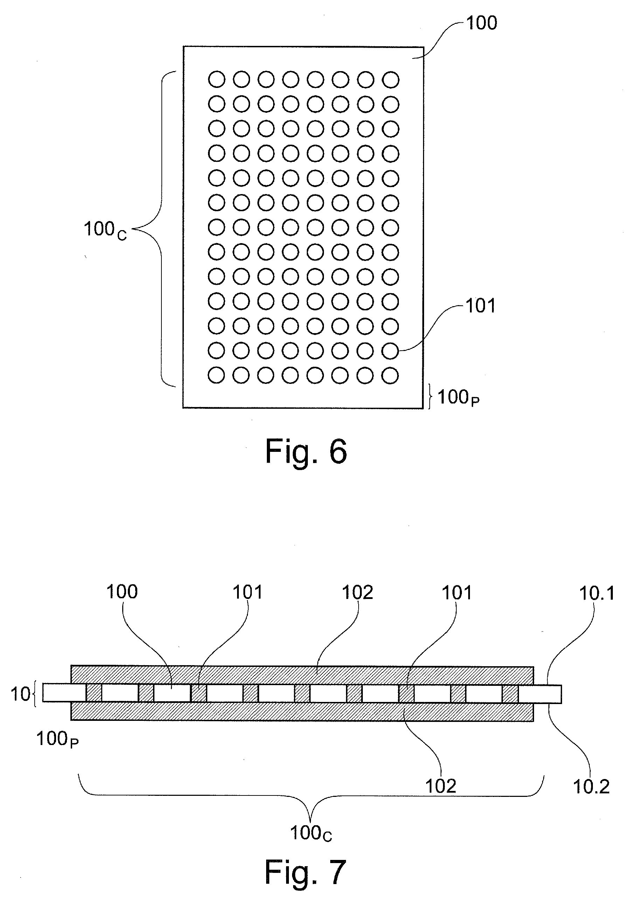

Un exemple de bande 100 en polymère conforme à l'invention est montré en figure 6 : la bande 100 est de forme rectangulaire et les trous 101 tous identiques entre eux sont réparties uniformément dans la partie centrale 100C de la bande, la partie périphérique 100P de celle-ci étant dépourvue de trous.

On procède alors au dépôt d'une pâte métallique sur une face 10.1 de la bande 100 selon une technique par sérigraphie. Cette pâte est avantageusement en aluminium et le dépôt permet de remplir au moins partiellement les trous 101 de cette pâte. On procède de la même manière sur l'autre face 10.2 avec une pâte de même composition selon la même technique de sérigraphie.

On obtient ainsi la partie support formant collecteur de courant d'un dispositif selon l'invention avec les deux couches métalliques 102 déposées sur chacune des deux faces 10.1, 10.2 de la bande 100 et en parfaite continuité de métal et donc électrique grâce aux trous 101 remplis au moins partiellement du métal, tel que l'aluminium (figure 7).

Grâce à la partie périphérique 100P de la bande en polymère 100 dépourvue de métal, on évite tout risque de court-circuit ultérieurement en fonctionnement, c'est-à-dire lorsqu'on fait circuler un courant électrique à travers une batterie bipolaire intégrant des dispositifs selon l'invention.

Au préalable comme indiqué précédemment, on a déterminé les dimensions, la densité des trous ainsi que la quantité de métal dans les couches et les trous pour minimiser à la fois la résistance électrique interne et l'échauffement par effet joule susceptible de se produire en fonctionnement.

Pour réaliser complètement une batterie bipolaire selon l'invention, on procède de la manière suivante.

On réalise dans un premier temps la partie support 10 du dispositif selon l'invention obtenue tel que précédemment (figure 8A), c'est-à-dire un semi-produit mixte zone fonctionnelle d'étanchéité 100/collecteur de courant 102 dont le métal est rempli dans les trous 101 de la bande en polymère.

On réalise alors le dépôt d'au moins une électrode en matériau d'insertion au lithium pour obtenir en final le dispositif selon l'invention.

Tel qu'illustré en figure 8B, pour réaliser une batterie bipolaire complète, on réalise trois dispositifs distincts selon l'invention :

- pour obtenir un dispositif 1 « bipolaire », on dépose une couche 12 de matériau d'insertion négatif au lithium (anode), telle qu'une couche en $Li_4Ti_5O_{12}$, sur une couche métallique 102 formant le collecteur, et une couche 11 de matériau d'insertion positif au lithium (cathode), telle qu'une couche en $LiFePO_4$, sur l'autre couche métallique formant le collecteur;
- pour obtenir un dispositif 1' « monopolaire » positif, on dépose uniquement une couche 11' de matériau d'insertion positif au lithium (cathode), telle qu'une couche en $LiFePO_4$, sur la seule couche métallique 102 déposée sur la bande 10 ;
- pour obtenir un dispositif 1" « monopolaire » négatif, on dépose uniquement une couche 12" de matériau d'insertion négatif au lithium 21 (anode), telle qu'une couche en $Li_4Ti_5O_{12}$, sur la seule couche métallique 102 déposée sur la bande 10.

Pour ces trois dispositifs 1, 1', 1", les couches d'électrodes sont avantageusement réalisées par une technique d'impression (héliographie, flexographie ou sérigraphie) sur la partie collectrice de courant 102 elle-même sous forme de couche(s) remplissant les trous 101, en laissant méthodiquement la périphérie 100P de la bande 100 en polymère dépourvue de toute électrode. Toutes les couches d'électrodes 11, 12, 11', 12' et les collecteurs de courant 102 sont sensiblement de mêmes dimensions, ainsi que toutes les zones périphériques 100P des bandes en polymère.

Eventuellement, on peut prévoir une étape de calandrage afin d'assurer une meilleure percolation électronique au sein de chaque électrode.

On empile en les alignant alors les dispositifs 1, 1', 1" avec celui bipolaire 1 entre les deux monopolaires 1', 1" et en les séparant par une membrane isolante électrique et conductrice ionique 3 constituant un séparateur: tel qu'illustré en figure 8C, on obtient alors une batterie bipolaire avec deux cellules électrochimiques C1, C2 empilées l'une sur l'autre et avec une zone périphérique continue 100P sur toute la hauteur.

Une fois, l'empilement réalisé, on imprègne chaque séparateur d'un électrolyte. Alternativement, l'électrolyte peut déjà imprégner chaque séparateur lors de sa mise en place dans l'empilement.

Pour réaliser l'étanchéité définitive, entre les compartiments d'une telle batterie bipolaire, on met en pression les périphéries 100P des trois bandes 100 des dispositifs 1, 1', 1 " les unes contre les autres et l'on maintient les trois bandes pressées les unes contre les autres. On constitue ainsi une paroi étanche aux électrolytes 3 des deux cellules C1, C2, qui entoure celles-ci sur toute la hauteur de l'empilement. Deux alternatives peuvent être envisagées pour réaliser cette étape d'étanchéité définitive :

- soit on applique une pression en périphérie 100P de la bande en polymère 100 des cellules, avantageusement à l'aide de l'emballage rigide 4 de la batterie (figure 8D),
- soit on réalise un thermoscellage des périphéries 100P de polymère, de façon uniforme sur la hauteur, avantageusement à l'aide de mors 5 en forme de U (figure 8D').

D'autres variantes et améliorations de l'invention qui vient d'être décrite peuvent être envisagées sans pour autant sortir du cadre de l'invention.

Ainsi, par exemple, on peut envisager un dépôt de chaque couche métallique à partir d'une pâte déposée par sérigraphie à travers un masque pour permettre une répartition localisée de la pâte.

En outre, au lieu d'un dépôt par sérigraphie on peut envisager un dépôt par héliographie ou par flexographie.

Par ailleurs, on peut envisager de réaliser une surépaisseur du polymère dans sa partie périphérique 100P de la bande 100 afin de permettre lors du thermo-scellage de conserver une épaisseur calibrée.

**Revendications**

1. Dispositif (1, 1', 1") pour générateur électrochimique au lithium, dans lequel un électrolyte est présent sous forme liquide ou de gel, comportant une bande (100) en matériau isolant électrique comportant au moins un polymère et, au moins une couche métallique (102) formant collecteur de courant, toute la périphérie ($100_P$) des faces principales (10.1, 10.2) de la bande (100) étant dépourvue de couche métallique et étant configurée pour servir de partie de paroi étanche à l'électrolyte dans le générateur, et au moins une couche métallique étant recouverte d'une électrode (11, 12) en matériau d'insertion au lithium. lithium caractérisé en ce **que**la au moins une couche métallique (102) est déposée sur au moins une des deux faces principales dans la partie centrale de la bande, la partie centrale (100C) de la bande comportant une pluralité de trous (101) débouchant sur ses deux faces principales opposées, les trous étant remplis au moins partiellement d'un métal continu avec chaque couche métallique déposée.

**2.** Dispositif (1, 1', 1") selon la revendication 1, le polymère majoritaire constituant la bande est une polyoléfine.

**3.** Dispositif (1, 1', 1") selon la revendication 1, le polymère majoritaire constituant la bande est une résine bi-composant, de préférence une résine acrylique.

**4.** Dispositif (1, 1', 1") selon l'une des revendications précédentes, les trous étant de section cylindrique.

**5.** Dispositif (1, 1', 1") selon l'une des revendications précédentes, les trous étant de section tronconique.

**6.** Dispositif (1, 1', 1") selon l'une des revendications précédentes, le diamètre des trous est compris 50 et 500 $\mu$m, de préférence entre 50 et 200 $\mu$m.

**7.** Dispositif (1, 1', 1") selon l'une des revendications précédentes, la densité des trous étant égal à un nombre compris entre 0,1 et 1 /cm$^2$ de bande, de préférence entre 0,1 et 0,3/cm$^2$ de bande.

**8.** Dispositif (1, 1', 1") selon l'une des revendications précédentes, comportant au moins une couche métallique (102) déposée sur chaque face principale (10.1, 10.2) et recouverte chacune d'une électrode (11, 12) en matériau d'insertion au Lithium.

**9.** Dispositif (1, 1', 1") selon l'une des revendications 1 à 7, comportant au moins une couche métallique déposée sur une seule des deux faces principales et recouverte d'une électrode (11, 12) en matériau d'insertion au Lithium.

**10.** Batterie bipolaire comprenant au moins deux cellules électrochimiques (C1, C2) empilées l'une sur l'autre et au moins un dispositif (1) selon la revendication 8, dans lequel l'une des deux couches formant le collecteur de courant (101) est recouverte de l'anode (12) en matériau d'insertion au lithium de l'une des deux cellules et l'autre des deux couches formant le collecteur de courant (101) est recouverte de la cathode (11) en matériau d'insertion au lithium de l'autre des deux cellules, toute la périphérie (100P) des faces principales de la bande en au moins un polymère constituant une zone périphérique d'une paroi étanche aux électrolytes des deux cellules qui entoure celles-ci.

**11.** Batterie bipolaire selon la revendication 10, comprenant en outre au moins un dispositif (1', 1") selon la revendication 9 avec l'autre face non recouverte par une électrode étant en contact par les trous remplis de métal avec un collecteur de courant terminal.

**12.** Procédé de réalisation d'une batterie bipolaire comprenant au moins deux cellules électrochimiques (C1, C2) empilées l'une sur l'autre comprenant les étapes suivantes:

a/ réalisation d'un dispositif (1) selon la revendication 8 et deux dispositifs (1', 1") selon la revendication 9 de sorte que :

- la seule face d'un (1") des deux dispositifs selon la revendication 9, sur laquelle est déposée la couche formant collecteur de courant est recouverte d'une anode (12") en matériau d'insertion au lithium,
- la seule face de l'autre (1') des deux dispositifs selon la revendication 9, sur laquelle est déposée la couche formant collecteur de courant, est recouverte d'une cathode (11') en matériau d'insertion au lithium et,
- l'une des deux faces du dispositif (1) selon la revendication 8, sur laquelle est déposée une couche formant collecteur de courant, est recouverte d'une cathode (11) en matériau d'insertion au lithium tandis que l'autre des deux faces du dispositif selon la revendication 8, sur laquelle est déposée une couche formant collecteur de courant, est recouverte d'une anode (12) en matériau d'insertion au lithium,

b/ empilement des trois dispositifs (1, 1', 1") avec intercalage d'un séparateur (3) entre deux adjacents, l'empilement avec intercalage étant réalisé de sorte que:

- l'anode (12") de l'un (1") des deux dispositifs selon la revendication 9 est en regard de la cathode (11) du dispositif (1) selon la revendication 8 en étant séparés d'un premier séparateur (3),
- la cathode (11') de l'autre des deux dispositifs selon la revendication 9 est en regard de l'anode (12) du dispositif (1) selon la revendication 8 en étant séparés d'un deuxième séparateur (3),

c/ mise en pression des périphéries (100P) des trois bandes des dispositifs les unes contre les autres, les séparateurs (3) étant imprégnés chacun d'un électrolyte,

d/ maintien des trois bandes pressées les unes contre les autres afin de constituer une paroi étanche aux électrolytes des deux cellules qui entoure celles-ci.

13. Procédé de réalisation selon la revendication 12 d'une batterie bipolaire comprenant n cellules électrochimique empilées individuellement les unes sur les autres, selon lequel on réalise les étapes a/ à d/ avec (n-1) dispositifs selon la revendication 8 et deux dispositifs selon la revendication 9, aux extrémités de l'empilement, n étant un nombre entier.

14. Procédé de réalisation selon la revendication 12 ou 13, selon lequel le dépôt de chaque couche métallique (102) sur une face (10.1, 10.2) est réalisé par sérigraphie d'une pâte métallique de sorte à remplir au moins partiellement chaque trou (101).

**Patentansprüche**

1. Vorrichtung (1, 1', 1") für galvanische Lithiumzelle, in der ein Elektrolyt in flüssiger Form oder Gelform vorhanden ist, umfassend ein Band (100) aus elektrisch isolierendem Material, das mindestens ein Polymer und mindestens eine Metallschicht (102) umfasst, die einen Stromkollektor bilden, wobei die Peripherie (100$_P$) der Hauptflächen (10.1, 10.2) des Bands (100) ohne Metallschicht sind und konfiguriert sind, um als dichter Wandabschnitt gegen das Elektrolyt in der Zelle zu dienen, und mindestens eine Metallschicht, die mit einer Elektrode (11, 12) aus Einsatzmaterial in Lithium beschichtet ist,
**dadurch gekennzeichnet, dass** die mindestens eine Metallschicht (102) auf mindestens einer der zwei Hauptflächen im mittleren Abschnitt des Bands aufgebracht ist, wobei der mittlere Abschnitt (100C) des Bands eine Vielzahl von Löchern (101) aufweist, die auf seinen zwei gegenüberliegenden Hauptflächen münden, wobei die Löcher zumindest teilweise mit einem Metall gefüllt sind, das mit jeder aufgebrachten Metallschicht kontinuierlich ist.

2. Vorrichtung (1, 1', 1") nach Anspruch 1, wobei das Polymer, aus dem das Band hauptsächlich besteht, ein Polyolefin ist.

3. Vorrichtung (1, 1', 1") nach Anspruch 1, wobei das Polymer, aus dem das Band hauptsächlich besteht, ein 2-Komponenten-Harz, vorzugsweise ein Acrylharz ist.

4. Vorrichtung (1, 1', 1") nach einem der vorherigen Ansprüche, wobei die Löcher einen zylindrischen Querschnitt haben.

5. Vorrichtung (1, 1', 1") nach einem der vorherigen Ansprüche, wobei die Löcher einen kegelstumpfartigen Querschnitt haben.

6. Vorrichtung (1, 1', 1") nach einem der vorherigen Ansprüche, wobei der Durchmesser der Löcher 50 und 500 $\mu$m, vorzugsweise 50 und 200 $\mu$m umfasst.

7. Vorrichtung (1, 1', 1") nach einem der vorherigen Ansprüche, wobei die Dichte der Löcher gleich einer Zahl ist, die zwischen 0,1 und 1 /cm$^2$ Band, vorzugsweise zwischen 0,1 und 0,3 /cm$^2$ Band liegt.

8. Vorrichtung (1, 1', 1") nach einem der vorherigen Ansprüche, umfassend mindestens eine Metallschicht (102), die auf jeder Hauptfläche (10.1, 10.2) aufgebracht ist und jeweils mit einer Elektrode (11, 12) aus Einsatzmaterial in Lithium beschichtet ist.

9. Vorrichtung (1, 1', 1") nach einem der Ansprüche 1 bis 7, umfassend mindestens eine Metallschicht, die auf nur einer der zwei Hauptflächen aufgebracht und mit einer Elektrode (11, 12) aus Einsatzmaterial in Lithium beschichtet ist.

10. Zweipolige Batterie, umfassend mindestens zwei galvanische Zellen (C1, C2), die übereinander gestapelt sind und mindestens eine Vorrichtung (1) nach Anspruch 8, wobei die eine der zwei Schichten, die den Stromkollektor (101) bilden, mit der Anode (12) aus Einsatzmaterial in Lithium einer der zwei Zellen beschichtet ist, und die andere der zwei Schichten, die den Stromkollektor (101) bilden, mit der Kathode (11) aus Einsatzmaterial in Lithium der anderen der zwei Zellen beschichtet ist, wobei die ganze Peripherie (100$_P$) der Hauptflächen des Bands einen peripheren Bereich einer dichten Wand gegen die Elektrolyten der zwei Zellen bildet, die sie umgeben.

**11.** Zweipolige Batterie nach Anspruch 10, umfassen u. a. mindestens eine Vorrichtung (1', 1") nach Anspruch 9, wobei die andere nicht von einer Elektrode beschichtete Seite durch die mit Metall gefüllten Löcher in Kontakt mit einem terminalen Stromkollektor ist.

**12.** Verfahren zur Ausführung einer zweipoligen Batterie umfassend mindestens zwei galvanische Zellen (C1, C2), die übereinander gestapelt sind, umfassend die folgenden Schritte:

a) Ausführung von einer Vorrichtung (1) nach Anspruch 8 und von zwei Vorrichtungen (1', 1") nach Anspruch 9, sodass:

- die einzige Fläche einer (1 ") der zwei Vorrichtungen nach Anspruch 9, auf der die Schicht aufgebracht ist, die den Stromkollektor bildet, mit einer Anode (12") aus Einsatzmaterial in Lithium beschichtet ist,
- die einzige Fläche der anderen (1') der zwei Vorrichtungen nach Anspruch 9, auf der die Schicht aufgebracht ist, die den Stromkollektor bildet, mit einer Kathode (11') aus Einsatzmaterial in Lithium beschichtet ist,
- die eine der zwei Flächen der Vorrichtung (1) nach Anspruch 8, auf der eine Schicht aufgebracht ist, die den Stromkollektor bildet, mit einer Kathode (11) aus Einsatzmaterial in Lithium beschichtet ist, während die andere der zwei Flächen der Vorrichtung nach Anspruch 8, auf der eine Schicht aufgebracht ist, die den Stromkollektor bildet, mit einer Anode (12) aus Einsatzmaterial in Lithium beschichtet ist,

b) Stapelung der drei Vorrichtungen (1, 1', 1") mit Einlage eines Trennelements (3) zwischen zwei anliegenden Vorrichtungen, wobei die Stapelung mit Einlage so ausgeführt wird, dass:

- die Anode (12") der einen (1") der zwei Vorrichtungen nach Anspruch 9 zur Kathode (11) der Vorrichtung (1) nach Anspruch 8 gerichtet und durch ein erstes Trennelement (3) getrennt ist,
- die Kathode (11') der anderen der zwei Vorrichtungen nach Anspruch 9 zur Anode (12) der Vorrichtung (1) nach Anspruch 8 gerichtet und durch ein zweites Trennelement (3) getrennt ist,

c) Unterdrucksetzung der Peripherien ($100_P$) der drei Bänder der Vorrichtungen gegeneinander, wobei die Trennelemente (3) jeweils mit einem Elektrolyten imprägniert sind,
d) Beibehaltung der drei aneinander gepressten Bänder, um eine dichte Wand gegen die Elektrolyten der zwei Zellen bilden, die sie umgeben.

**13.** Ausführungsverfahren nach Anspruch 12 einer zweipoligen Batterie umfassend n einzeln übereinander gestapelte galvanische Zellen, gemäß dem die Schritte a) bis d) mit (n-1) Vorrichtungen nach Anspruch 8 und zwei Vorrichtungen nach Anspruch 9 an den Enden der Stapelung, wobei n eine Ganzzahl ist, ausgeführt werden.

**14.** Ausführungsverfahren nach Anspruch 12 oder 13, gemäß dem das Aufbringen von jeder Metallschicht (102) auf eine Fläche (10.1, 10.2) durch Siebdruck einer Metalllasche erfolgt, so dass jedes Loch (101) mindestens teilweise gefüllt ist.

**Claims**

**1.** Device (1, 1', 1") for a lithium electrochemical generator, in which an electrolyte is present in liquid or gel form, comprising a band (100) made of electrical insulating material, comprising at least one polymer, and at least one metal layer (102) forming a current collector, the whole periphery ($100_P$) of the principal faces (10.1, 10.2) of the band (100) being devoid of a metal layer and being configured to serve as part of a wall sealed with the electrolyte in the generator and at least one metal layer being covered with an electrode (11, 12) made of lithium insertion material, **characterised in that** the at least one metal layer (102) is deposited on at least one of the two principal faces in the central part of the band, the central part (100C) of the band comprising a plurality of holes (101) opening onto its two opposing principal faces, the holes being filled at least partly with a continuous metal with each metal layer deposited.

**2.** Device (1, 1', 1 ") according to claim 1, the majority of the polymer constituting the band is a polyolefin.

**3.** Device (1, 1', 1") according to claim 1, the majority of the polymer constituting the band is a two-component resin, preferably an acrylic resin.

**4.** Device (1, 1', 1") according to one of the previous claims, the holes having a cylindrical section.

**5.** Device (1, 1', 1") according to one of the previous claims, the holes having a tapered section.

**6.** Device (1, 1', 1") according to one of the previous claims, the diameter of the holes is between 50 and 500 $\mu$m, preferably between 50 and 200 $\mu$m.

**7.** Device (1, 1', 1") according to one of the previous claims, the density of the holes being equal to a number between 0.1 and 1 per $cm^2$ of band, preferably between 0.1 and 0.3 per $cm^2$ of band.

**8.** Device (1, 1', 1") according to one of the previous claims, comprising at least one metal layer (102) deposited on each principal face (10.1, 10.2) and each covered with an electrode (11, 12) made of lithium insertion material.

**9.** Device (1, 1', 1") according to one of claims 1 to 7, comprising at least one metal layer deposited on a single one of the two principal faces and covered with an electrode (11, 12) made of lithium insertion material.

**10.** Bipolar battery comprising at least two electrochemical cells (C1, C2) stacked one on top of the other and at least one device (1) according to claim 8, in which one of the two layers forming the current collector (101) is covered with the anode (12) made of lithium insertion material of one of the two cells and the other one of the two layers forming the current collector (101) is covered with the cathode (11) made of lithium insertion material of the other one of the two cells, the whole periphery (100P) of the principal faces of the band made of at least one polymer constituting a peripheral area of a wall sealed with the electrolytes of the two cells surrounding them.

**11.** Bipolar battery according to claim 10, also comprising at least one device (1', 1") according to claim 9 with the other face not covered with an electrode being in contact with a terminal current collector through the holes filled with metal,

**12.** Method for making a bipolar battery comprising at least two electrochemical cells (C1, C2) stacked one on top of the other comprising the following stages:

a/ making a device (1) according to claim 8 and two devices (1', 1") according to claim 9 so that:

- the single face of one (1 ") of the two devices according to claim 9, on which the layer forming the current collector is deposited, is covered with an anode (12") made of lithium insertion material,
- the single face of the other one (1') of the two devices according to claim 9, on which the layer forming the current collector is deposited, is covered with a cathode (11') made of lithium insertion material and
- one of the two faces of the device (1) according to claim 8, on which a layer forming a current collector is deposited, is covered with a cathode (11) made of lithium insertion material, whereas the other one of the two faces of the device according to claim 8, on which a layer forming a current collector is deposited, is covered with an anode (12) made of lithium insertion material,

b/ stacking the three devices (1, 1', 1") with interleaving of a separator (3) between two adjacent ones, the stacking with interleaving being carried out so that:

- the anode (12") of one (1") of the two devices according to claim 9 is opposite the cathode (11) of the device (1) according to claim 8, being separated by a first separator (3),
- the cathode (11') of the other one of the two devices according to claim 9 is opposite the anode (12) of the device (1) according to claim 8, being separated by a second separator (3),

c/ pressing the peripheries (100P) of the three bands of the devices against each other, the separators (3) each being impregnated with an electrolyte,
d/ keeping the three bands pressed against each other in order to constitute a wall sealed with the electrolytes of the two cells surrounding them.

**13.** Method for making a bipolar battery according to claim 12 comprising n electrochemical cells stacked individually on top of each other, according to which stages a/ to d/ are carried out with (n-1) devices according to claim 8 and two devices according to claim 9 at the ends of the stack, n being a whole number.

**14.** Method for making according to claim 12 or 13, according to which depositing each metal layer (102) on a face (10.1, 10.2) is carried out by screen printing with a metal paste so as to fill each hole (101) at least partly.

Fig. 1

Fig. 2A

Fig. 2B

**Fig. 3A**

**Fig. 3B**

**Fig. 4**

Fig. 5A

Fig. 5B

Fig. 5C

Fig. 6

Fig. 7

Fig. 8A

Fig. 8B

Fig. 8C

Fig. 8D

Fig. 8D'

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060121348 A
- US 7348098 B
- US 7338733 B
- US 2008060189 A
- US 20080057392 A
- US 7335448 B
- US 7279248 B
- US 7220516 B
- US 7320846 B

- US 7163765 B
- WO 03047021 A
- WO 2006061696 A
- US 7097937 B
- EP 2073300 A
- JP 2010153224 B
- WO 2011157751 A
- EP 1596459 A